Europäisches Patentamt

European Patent Office

Office européen des brevets

(11) Veröffentlichungsnummer: **0 301 405 B1**

## EUROPÄISCHE PATENTSCHRIFT

(45) Veröffentlichungstag der Patentschrift: **29.09.93**

(51) Int. Cl.⁵: **G11B 7/24**

(21) Anmeldenummer: **88111751.9**

(22) Anmeldetag: **21.07.88**

(54) **Flächenförmiges, mehrschichtiges, laseroptisches Aufzeichnungsmaterial.**

(30) Priorität: **29.07.87 DE 3725134**

(43) Veröffentlichungstag der Anmeldung:
**01.02.89 Patentblatt 89/05**

(45) Bekanntmachung des Hinweises auf die
Patenterteilung:
**29.09.93 Patentblatt 93/39**

(84) Benannte Vertragsstaaten:
**BE DE FR GB IT NL**

(56) Entgegenhaltungen:
**EP-A- 0 163 810**
**DE-A- 3 642 585**

**PATENT ABSTRACTS OF JAPAN vol. 11, no.
205 (M-603)(2652) 03 Juli 1987, & JP-A-62
25087 (RICOH CO.LTD.) 03 Februar 1987**

**PATENT ABSTRACTS OF JAPAN vol. 10, no.
22 (P-424)(2079) 28 Januar 1986, & JP-A-60
173731 (NIPPON DENSHIN DENWA KOSHA)
07 September 1985**

(73) Patentinhaber: **BASF Aktiengesellschaft
Carl-Bosch-Strasse 38
D-67063 Ludwigshafen(DE)**

(72) Erfinder: **Steininger, Helmut, Dr.
Dr.-Ernst-Kilb-Weg 15
D-6520 Worms 26(DE)**
Erfinder: **Binder, Horst
Haendelstrasse 3-5
D-6840 Lampertheim(DE)**

**Beschreibung**

Die Erfindung betrifft ein neues, in seinen anwendungstechnischen Eigenschaften verbessertes, flächenförmiges, mehrschichtiges, laseroptisches Aufzeichnungsmaterial, welches

a) einen dimensionsstabilen, optisch klaren, aus Kunststoffen aufgebauten Träger mit strukturierter Oberfläche,

b) eine darauf aufliegende Zwischenschicht, die in organischen Lösungsmitteln unlöslich ist und die gegenüber diesen als Diffusionssperre wirkt, und hierauf

c) eine durch Auftragen aus einer Lösung und Trocknen herstellbare, amorphe, thermisch veränderbare, Farbstoffe enthaltende Aufzeichnungsschicht

aufweist.

Flächenförmige, mehrschichtige, laseroptische Aufzeichnungsmaterialien mit thermisch veränderbaren Aufzeichnungsschichten, welche beim Bestrahlen mit auf sie fokussierten Laserstrahlen in den Auftreffstellen ihre Reflektivität ändern, sind bekannt.

In die Aufzeichnungsschichten dieser Aufzeichnungsmaterialien können digitale Daten mit Hilfe impulsmodulierter Schreiblaserstrahlen in Form thermisch veränderter Bereiche eingeschrieben werden. Dabei sind die Schreiblaserstrahlen auf die Aufzeichnungsschichten fokussiert und treffen senkrecht auf sie auf. Für das Einschreiben analoger Daten können auch Dauerstrich-Laser angewendet werden. Im Falle eingeschriebener digitaler Daten haben die thermisch veränderten Bereiche der Aufzeichnungsschichten eine runde oder elliptische Grundfläche, welche man auch als "spot" bezeichnet. Im Falle analoger Daten sind die thermisch veränderten Bereiche von beliebiger Grundfläche.

Dabei können diese Bereiche die Form von Löchern haben, welche die Aufzeichnungsschichten ganz durchdringen. In diesem Fall spricht man allgemein von ablativer laseroptischer Datenaufzeichnung. Beim Auslesen der Daten mit einem Leselaserstrahl wird die unterschiedliche Reflektivität der Löcher und der unveränderten Bereiche der Aufzeichnungsschichten ausgenutzt. Um hierbei eine hohe Empfindlichkeit und ein hohes Signal-Rausch-Verhältnis zu erzielen, kann eine Reflektorschicht mitverwendet werden, die durch die Lochbildung freigelegt wird und den Leselaserstrahl besonders stark reflektiert.

Die thermisch veränderten Bereiche können auch die Form von Kratern (pits) haben, welche gegebenenfalls einen sauber ausgebildeten Kraterrand (wall) aufweisen. In diesem Falle spricht man von deformativer laseroptischer Datenaufzeichnung. Hierbei werden die Daten über die Beugung des Lichts des Leselaserstrahls an den Kratern ausgelesen.

Durch die thermische Veränderung können indes auch Bereiche entstehen, in denen keine Ablation oder Deformation, sondern eine Phasenumwandlung des Materials der Aufzeichnungsschichten in eine andere Stoffmodifikation stattgefunden hat. In einem solchen Falle spricht man von laseroptischer Datenaufzeichnung durch Phasenumwandlung. Im allgemeinen wird durch die Phasenumwandlung die Reflektivität in den beschriebenen Bereichen erniedrigt und/oder die Lichtdurchlässigkeit erhöht. Indessen kann es unter Umständen auch zum gegenteiligen Effekt kommen, d.h. die Reflektivität wird erhöht und/oder die Lichtdurchlässigkeit erniedrigt. Im folgenden werden die in dieser Weise thermisch veränderten Bereiche als Flecke bezeichnet.

Außerdem kann in den thermisch veränderten Bereichen eine chemische Reaktion eines Bestandteils oder eine chemische Reaktion zwischen mehreren Bestandteilen der Aufzeichnungsschichten stattgefunden haben, wodurch die optischen Eigenschaften der Aufzeichnungsschichten in den betreffenden Bereichen geändert worden sind.

Überdies kann sich das Material der Aufzeichnungsschichten bei seiner Erwärmung durch den auftreffenden Schreiblaserstrahl selbst ausdehnen oder durch eine Gasentwicklung aus einer darunterliegenden Schicht ausgedehnt werden, so daß sich in den Aufzeichnungsschichten Reliefstrukturen bilden, welche die eingeschriebenen Daten beinhalten.

Für das Lesen der Daten verwendet man im allgemeinen kontinuierlich emittierte Leselaserstrahlen (Dauerstrich-Laserstrahlen), deren Energie nicht dazu ausreicht, weitere Veränderungen in den Aufzeichnungsschichten hervorzurufen. Die Leselaserstrahlen sind dabei gleichfalls auf die Aufzeichnungsschichten fokussiert und treffen senkrecht auf diese auf.

Beim Lesevorgang wird im allgemeinen das von den Aufzeichnungsschichten zurückreflektierte Licht mit Hilfe geeigneter optischer Anordnungen erfaßt, üblichen und bekannten Detektoren zugeführt und durch geeignete elektronische Apparate in Signale umgewandelt.

Diese Schreib- und Leseverfahren sowie die entsprechenden hierfür geeigneten entsprechenden Aufzeichnungsmaterialien kennzeichnet man daher im allgemeinen mit dem Begriff "laseroptisch".

Aufzeichnungsmaterialien der in Rede stehenden Art, welche einen Träger (a), eine Zwischenschicht und eine Aufzeichnungsschicht (c) enthalten, sind aus der US-A-4 551 413 bekannt. Hierbei wird als Zwischenschicht eine Reflektionsschicht aus Metallen wie Aluminium, Kupfer, Chrom, Gold oder Rhodium verwendet. Diese Metalle sind naturgemäß in organischen Lösungsmitteln unlöslich. Zusätzlich kann sich zwischen der Zwischenschicht und der Aufzeichnungsschicht (c) auch eine dielektrische Schicht aus z.B. Siliziumdioxid befinden, welche im Vakuum aufgedampft oder aufgesputtert worden ist. Von Nachteil ist hierbei die aufwendige Herstellweise des Aufzeichnungsmaterials.

Aus der US-A-4 622 261 geht ein Aufzeichnungsmaterial hervor, welches einen Träger ohne Oberflächenstrukturierung, eine Zwischenschicht und eine Aufzeichnungsschicht aufweist, wobei die Aufzeichnungsschicht aus Metallen, Halbmetallen, Halbleitern oder Legierungen oder aus Sulfiden, Oxiden, Boraten, Silikaten, Carbiden oder Nitriden von Metallen oder Halbmetallen oder aus Gemischen dieser Materialien bestehen kann. Darüber hinaus kommen auch noch die Materialien gemäß der US-A-4 415 650 für den Aufbau der Aufzeichnungsschicht in Betracht. Bei diesen Materialien kann es sich um Farbstoffe oder Pigmente handeln, welche zur Herstellung der Aufzeichnungsschicht im Vakuum aufgedampft werden.

Die Zwischenschicht gemäß der US-A-4 622 261 wird dort als "polysiloxane coating film" bezeichnet und aus einem Monomeren der allgemeinen Formel I,

$$R_xSi(OR^1)_{4-x} \qquad I$$

worin R und $R^1$ $C_1$- bis $C_3$-Alkylgruppen oder Phenylgruppen und x die Zahl 0 oder die Zahlen 1, 2 oder 3 bezeichnet, hergestellt. Hierzu wird das Monomere in einem polaren organischen Lösungsmittel wie Ethanol gelöst, und die Lösung wird auf die Oberfläche des Trägers aufgetragen und hiernach getrocknet. Die in dieser Weise erhaltene Monomerschicht einer Dicke von 0,1 bis 50 µm wird durch Erhitzen auf 100 bis 500°C zu einer Polysiloxanschicht auskondensiert. Die Monomerschicht kann aber auch durch Erhitzen ihrer Oberfläche auf 400 bis 3000°C während 1 bis 5 Sekunden ausgehärtet werden. Hierfür kommen Flammen, Plasma- oder Glühentladungen oder Laser-, Elektronen- oder Mikrowellenstrahlen als Heizquellen in Betracht. Es werden keine Angaben über die stoffliche Zusammensetzung der resultierenden Zwischenschicht gemacht. Sie dient in erster Linie der Glättung der Oberfläche des Trägers. Sie verbessert nicht das "tracking" beim Lesen der eingeschriebenen Daten, welches aufgrund der fehlenden Oberflächenstrukturierung des Trägers ohnehin nur schwer möglich ist.

Ein vergleichbares Aufzeichnungsmaterial ist aus der JP-A-61011294 bekannt. Dieses Aufzeichnungsmaterial enthält einen Träger (a), eine Zwischenschicht und eine Aufzeichnungsschicht (c). Die Zwischenschicht besteht aus 3 bis 10 nm großen kolloidalen Partikeln, welche durch Hydrolyse von Tetraalkalimetallsiliziden, Tetramethyl- oder Tetraethylsilan oder Siliziumtetrachlorid hergestellt wurden. Diese Partikel werden in Alkohol, Essigsäurealkylestern oder aromatischen Kohlenwasserstoffen dispergiert und auf die Oberfläche des Trägers (a) aufgetragen und getrocknet, so daß eine Trockenschichtdicke von 0,005 bis 0,05 µm resultiert. Diese Zwischenschicht ist ihrer Natur gemäß unregelmäßig, durchlässig für organische Lösungsmittel und darüber hinaus auch noch mechanisch wenig stabil, so daß es bei der nachträglichen Behandlung mit organischen Lösungen zu einer Schädigung der Oberflächenstruktur des Trägers (a) kommt, was die Qualität des Aufzeichnungsmaterials deutlich vermindert.

Nachteile dieser Art weist auch das aus der JP-A-61057389 bekannte Aufzeichnungsmaterial auf. Dessen 20 nm bis 50 µm dicke Zwischenschicht besteht aus einem erhitzten Organoalkoxi- oder Organoaryloxisilan, welches, bezogen auf das Silan, 0,1 bis 100 Gew.% an Aluminium, Titan, Phosphor, Bor, Antimon, Arsen, Zink, Gold, Platin, Gallium, Zinn, Thallium, Cer und/oder Indium enthält. Die Aufzeichnungsschicht besteht aus Tellur, Zink, Indium, Zinn, Zirkon, Aluminium, Kupfer, Germanium, Wismuth, Arsen, Antimon, Gallium oder Silizium.

Darüber hinaus ist aus der JP-A-61214161 ein Aufzeichnungsmaterial bekannt, welches auf seiner Aufzeichnungsschicht aus Tellur/Tellurdioxid und/oder auf derjenigen Seite seines Trägers, welche der Aufzeichnungsschicht abgewandt ist, eine Schutzschicht aufweist. Diese Schutzschicht wird durch Auftragen einer Lösung von kolloidalem Siliziumdioxid und Tetraethoxisilan in Isopropanol auf die betreffenden Oberflächen und Trocknen der nassen Schichten bei 70°C während 24 Stunden hergestellt. Anstelle des Siliziumalkoholats können auch Zirkon- oder Titanalkoholate verwendet werden.

Ferner ist es von dem Gebiet der Halbleitertechnik her bekannt, Siliziumdioxidisolierschichten oder -masken aus organischen Vorstufen herzustellen.

So geht aus der DE-A-29 44 180 ein Verfahren hervor, bei dem man eine 0,2 bis 0,3 µm dicke Siliziumdioxidschicht durch Aufschleudern einer Lösung aus 1 Vol.-Teil Tetraethoxisilan, 1 Vol.-Teil Methanol und ca. 0,4 Vol.-Teilen 0,1 molarer Salpetersäure auf ein Halbleitersubstrat und ca. 15minütiges Tempern der nassen Schicht bei 600 bis 700°C herstellt.

Aus der DE-A-22 31 912 ist die Herstellung einer Siliziumdioxidmaske durch Hydrolyse von Vinyltrichlorsilan, Polymerisation des gebildeten Vinyltrihydroxisilans, Lösen des Polymerisats, Auftragen der Polymerisatlösung auf einen Träger, Trocknen der so erhaltenen nassen Polymerisatschicht, gefolgt von bildmäßiger Belichtung und Entwicklung, sowie durch zweistündiges Tempern der so erhaltenen Reliefschicht bei 500 bis 1000°C in einer oxidierenden Atmosphäre, welche zu 50 % aus Sauerstoff besteht, bekannt.

Die aus der JP-A-61214161 bekannten Schutzschichten eignen sich wegen ihres hohen Gehaltes an kolloidalem Siliziumdioxid nicht für die Herstellung von Zwischenschichten (b), welche die Oberfläche von Trägern (a) gleichmäßig und ohne Verfälschung ihrer Oberflächenstruktur bedecken sollen.

Die aus der DE-A-29 44 180 und DE-A-22 31 912 bekannten Verfahren kommen wegen den dabei auftretenden extremen Reaktionsbedingungen für die Herstellung der Zwischenschichten (b) von laseroptischen Aufzeichnungsmaterialien aus Trägern (a), Zwischenschichten (b) und Aufzeichnungsschichten (c) von vornherein nicht in Betracht.

Aufgabe der vorliegenden Erfindung war es, ein neues, in seinen anwendungstechnischen Eigenschaften verbessertes, flächenförmiges, mehrschichtiges, laseroptisches Aufzeichnungsmaterial mit

a) einem dimensionsstabilen, optisch klaren, aus Kunststoffen aufgebauten Träger mit strukturierter Oberfläche,
b) einer darauf aufliegenden Zwischenschicht, die in organischen Lösungsmitteln unlöslich ist und die gegenüber diesen als Diffusionssperre wirkt, und hierauf
c) einer durch Auftragen aus einer Lösung und Trocknen herstellbaren, amorphen, thermisch veränderbaren, Farbstoffe enthaltenden Aufzeichnungsschicht

aufzuzeigen, welches die vom Stand der Technik her bekannten Nachteile nicht mehr aufweist.

Demgemäß wurde ein flächenförmiges, mehrschichtiges, laseroptisches Aufzeichnungsmaterial gefunden, welches

a) einen dimensionsstabilen, optisch klaren, aus Kunststoffen aufgebauten Träger mit strukturierter Oberfläche,
b) eine darauf aufliegende Zwischenschicht, die in organischen Lösungsmitteln unlöslich ist und die gegenüber diesen als Diffusionssperre wirkt, und hierauf
c) eine durch Auftragen aus einer Lösung und Trocknen herstellbare, amorphe, thermisch veränderbare, Farbstoffe enthaltende Aufzeichnungsschicht

aufweist und welches dadurch gekennzeichnet ist, daß die Zwischenschicht (b)

$b_1$) 5 bis 95 nm dick ist und, jeweils bezogen auf (b), aus

$b_2$) 88 bis 99,5 Gew.% an Oxiden und/oder Oxidhydraten von einem oder von mehreren der Elemente aus der Gruppe Titan, Zirkonium, Hafnium, Thorium, Vanadin, Niob, Tantal, Wolfram, Aluminium, Gallium, Indium, Silizium, Germanium und Zinn und aus

$b_3$) 0,5 bis 12 Gew.% an Kohlenwasserstoffresten besteht und

$b_4$) durch Auflösen eines Alkoxids oder mehrerer Alkoxide von einem oder mehreren der oben aufgeführten Elemente in einem polaren, im wesentlichen $C_1$- bis $C_6$-Alkanole enthaltenden, flüssigen Medium, Auftragen dieser Lösung auf die Oberfläche des Trägers (a) und Tempern der in dieser Weise erhaltenen feuchten Schicht in Gegenwart von Wasser bei 50 bis 120°C während 5 Minuten bis 2 Stunden herstellbar ist.

Dabei umfaßt der Begriff "flächenförmig" alle Raumformen, deren Dicke erheblich kleiner ist als ihre Länge und Breite. Demnach kann es sich hier z.B. um band-, platten- oder insbesondere auch scheibenförmige Aufzeichnungsmaterialien handeln, wobei die scheibenförmigen im allgemeinen auch als Datenplatten bezeichnet werden.

Der Begriff "amorph" gibt an, daß das Material der Aufzeichnungsschicht keine kristallinen Bereiche aufweist, welche größer sind als die thermisch veränderten Bereiche, sondern daß es in dieser Größenordnung optisch isotrop ist.

Das Merkmal "strukturierte Oberfläche" verweist darauf, daß in der Oberfläche des Trägers konzentrische oder spiralförmige Spurrillen oder sonstige regelmäßig angeordnete Erhöhungen und/oder Vertiefungen vorhanden sind. Diese Strukturierung im Mikrometer- oder im Submikrometerbereich dient im allgemeinen der exakten Führung der Schreib- und Leselaserstrahlen, was auch als "tracking" bezeichnet wird, und der Kodierung und dem Wiederauffinden der Daten.

Wesentlicher Bestandteil des erfindungsgemäßen Aufzeichnungsmaterials ist seine erfindungsgemäß zu verwendende Zwischenschicht (b).

Diese Zwischenschicht (b) bedeckt die unter ihr liegende strukturierte Oberfläche des Trägers (a) vollständig und in gleichmäßiger Dicke, so daß die betreffende Oberflächenstruktur nicht durch beispielsweise besonders dicke Ablagerungen in den Vertiefungen der Struktur verfälscht wird.

Die erfindungsgemäße Zwischenschicht (b) ist 5 bis 95 nm dick. Bei Dicken unterhalb von 5 nm besteht die Gefahr, daß die Zwischenschicht (b) die Trägeroberfläche nicht mehr vollständig bedeckt, sondern daß

4

sie mehr oder weniger große "Inseln" ausbildet, zwischen denen die Trägeroberfläche freiliegt, so daß die Zwischenschicht (b) auch nicht mehr als Diffusionssperre wirkt. Bei Dicken oberhalb 95 nm kann es dagegen zur Verfälschung der Oberflächenstruktur des Trägers (a) kommen, weil die darin enthaltenen feinen Strukturelemente durch das Material der Zwischenschicht überdeckt werden können.

Hält man dagegen die Dicke in dem Bereich von 5 bis 95 nm, so folgt die Zwischenschicht (b) getreulich der Oberflächenstruktur des Trägers (a) und bedeckt diese gleichmäßig, wobei es weder zur Bildung von "Inseln", zu unerwünscht dicken Ablagerungen in den Vertiefungen, noch zu einer unerwünscht dünnen Bedeckung der Erhöhungen der Struktur kommt. Von Vorteil ist hierbei eine Dicke der Zwischenschicht im Bereich von 20 bis 70 nm. Von ganz besonderem Vorteil ist hierbei eine Dicke im Bereich von 30 bis 60 nm, wobei der Bereich von 50 bis 60 nm hinsichtlich des Material- und Herstellaufwands einerseits sowie der gleichmäßigen Bedeckung der Oberflächenstruktur der Trägeroberfläche (a) und der Sperrwirkung gegenüber organischen Lösungsmitteln andererseits ein Optimum darstellt.

Erfindungsgemäß besteht die Zwischenschicht (b) zu 88 bis 99,5 Gew.% aus Oxiden und/oder Oxidhydraten von einem oder mehreren der Elemente aus der Gruppe Titan, Zirkonium, Hafnium, Thorium, Vanadin, Niob, Tantal, Wolfram, Aluminium, Gallium, Indium, Silizium, Germanium und Zinn.

Oxide und/oder Oxidhydrate dieser Elemente haben sich gegenüber denen der übrigen Elemente wie beispielsweise Chrom, Mangan, Eisen oder Nickel als besonders gut geeignet für den Aufbau der Zwischenschicht (b) erwiesen, weil sie homogene, optisch klare, mechanisch feste, nicht spröde, rißbeständige, undurchlässige, dünne Schichten zu bilden vermögen, welche über ihre gesamte Ausdehnung hinweg von gleicher oder weitgehend gleicher Dicke sind. Dabei ist unter "weitgehend gleich" zu verstehen, daß gegebenenfalls auftretende Abweichungen in der Dicke so gering sind, daß sie keinerlei Auswirkung auf das Eigenschaftsprofil der Zwischenschicht (b) haben.

Von den genannten Oxiden und/oder Oxidhydraten sind diejenigen der Elemente aus der Gruppe Titan, Zirkonium, Aluminium, Silizium und Zinn besonders bevorzugt, weil sich hiermit das ohnehin schon vorteilhafte Eigenschaftsprofil der Zwischenschichten (b) in einfacher Weise noch weiter optimieren und den Oberflächeneigenschaften des Trägers (a) einerseits und den Eigenschaften der Aufzeichnungsschicht (c) andererseits anpassen läßt.

Die genannten Oxide und/oder Oxidhydrate sind in den Zwischenschichten (b) zu 88 bis 99,5 Gew.% enthalten. Liegt dieser Gehalt unter 88 Gew.%, so ist die Qualität der betreffenden Zwischenschicht gering, wobei insbesondere ihre Härte, ihre Beständigkeit gegenüber organischen Lösungsmitteln und ihre Diffusionssperrwirkung gegenüber diesen in Mitleidenschaft gezogen wird. Liegt der Gehalt dagegen über 99,5 %, so besteht die Gefahr, daß die betreffende Zwischenschicht spröde und empfindlich gegenüber mechanischen Erschütterungen wird und außerdem im Laufe der Zeit zur Bildung von Rissen neigt, was ihrer Diffusionssperrwirkung in hohem Maße abträglich ist.

Demgegenüber weisen Zwischenschichten (b) mit einem Oxid- und/oder Oxidhydratgehalt von 88 bis 99,5 Gew.% ein vorteilhaftes Eigenschaftsbild auf und erfüllen die gewünschten technischen Funktionen in hervorragender Weise. Dabei ist ein Gehalt von 92 bis 98 Gew.%, insbesondere 94 bis 95,5 Gew.%, von ganz besonderem Vorteil, insbesondere dann, wenn es sich um Oxide und/oder Oxidhydrate der Elemente aus der Gruppe Titan, Zirkonium, Aluminium, Silizium und Zinn handelt.

Die Zwischenschichten (b) können Oxide und/oder Oxidhydrate von mehreren der Elemente aus der genannten Gruppe enthalten. Für den Aufbau der Zwischenschicht (b) wird indes die Verwendung des Oxids und/oder Oxidhydrats von einem einzigen der Elemente aus der genannten Gruppe bevorzugt.

Die Zwischenschichten (b) enthalten erfindungsgemäß desweiteren 0,5 bis 12 Gew.%, bezogen auf (b), an Kohlenwasserstoffresten. Hierbei handelt es sich vor allem um $C_1$- bis $C_6$-Alkylreste, von denen ein gewisser Anteil auch noch Sauerstoffatome enthalten kann, welche in der Form von Carboxyl-, Oxo-, Aldehyd- oder Etherfunktionen mit den Alkylresten verbunden sind. Diese Kohlenwasserstoffreste, welche gegebenenfalls noch Sauerstoffatome enthalten, können in geringem Umfang als separat vorliegende Stoffe in der anorganischen Matrix der Zwischenschicht (b) vorhanden sein. Der überwiegende Anteil dieser Kohlenwasserstoffreste ist indes über Sauerstoffatome mit einem oder mehreren der Elemente aus der genannten Gruppe verbunden. Dabei ist das Verhältnis von gebundenen Kohlenwasserstoffresten zu separat vorliegenden, diese Reste enthaltenden Verbindungen für das Eigenschaftsprofil der Zwischenschicht (b) von untergeordneter Bedeutung; der das Eigenschaftsprofil in der Hauptsache mitbestimmende Parameter ist der Gesamtgehalt an Kohlenwasserstoffresten. Liegt dieser unterhalb 0,5 Gew.%, so ergeben sich die bereits geschilderten Nachteile, wie höhere Sprödigkeit, Empfindlichkeit gegenüber mechanischen Erschütterungen und Neigung zur Rißbildung. Liegt der Gehalt oberhalb 12 Gew.%, so wird die Härte, die Beständigkeit gegenüber organischen Lösungsmitteln und die Diffusionssperrwirkung der betreffenden Zwischenschicht gemindert. Außerdem können Trübungen auftreten, welche durch Ablagerungen oder Blasenbildung hervorgerufen werden. Von besonderem Vorteil ist es, wenn der Gehalt an Kohlenwasserstoffresten im Bereich von 2 bis 8 Gew.%, insbesondere von 4,5 bis 6 Gew.%, bezogen auf die Zwischenschicht (b), liegt.

Dementsprechend bestehen ganz besonders vorteilhafte Zwischenschichten (b) aus

- 94 bis 95,5 Gew.% eines Oxids und/oder Oxidhydrats von einem Element aus der Gruppe Titan, Zirkonium, Aluminium, Silizium und Zinn und aus
- 4,5 bis 6 Gew.% an Kohlenwasserstoffresten.

Die Zusammensetzung der erfindungsgemäß zu verwendenden Zwischenschichten (b) kann in einfacher Weise mit Hilfe der ESCA-Methode ermittelt werden. Unter "ESCA" versteht man die Elektronenspektroskopie für die chemische Analyse (electron spectroscopy for chemical analysis), welche sich speziell für die eingehende Untersuchung dünner Schichten eignet. Hierbei werden die dünnen Schichten nach einer Vorbehandlung, durch welche die auf ihrer Oberfläche vorkommenden Verunreinigungen entfernt werden, im Hochvakuum einer Röntgenstrahlung, beispielsweise der $MgK_\alpha$ Röntgenstrahlung einer Energie E von 1253,6 eV ausgesetzt, wonach man die Energieverteilung der unter dem Einfluß der Röntgenstrahlung von der Probe emittierten Elektronen registriert. Aus den so erhaltenen Spektren ergeben sich nicht nur die Natur und das Gewichtsverhältnis der in der Probe vorhandenen Atome, sondern auch quantitativ deren unterschiedlichen Bindungszustände, woraus unmittelbar auf die Art und Menge der vorliegenden Verbindungen geschlossen werden kann. Geräte für die Ausführung von ESCA-Messungen sind kommerziell erhältlich.

Die besonderen vorteilhaften Eigenschaften und die äußere Gestalt der erfindungsgemäßen Zwischenschichten (b) hängen auch mit ihrer besonderen erfindungsgemäßen Herstellweise unmittelbar zusammen und lassen sich nicht oder nur in sehr eingeschränktem Maße durch andere Herstellmethoden erzielen. Bestenfalls erhält man durch die anderen Methoden Zwischenschichten, in denen lediglich einzelne Merkmale - nicht aber deren Kombination - verwirklicht sind. Diese isolierten Einzelmerkmale sind überdies weder zuverlässig zu reproduzieren, noch können sie optimal aufeinander abgestimmt werden. Es bleibt vorerst offen, welche Effekte bei der erfindungsgemäßen Herstellweise letztlich die erwünschten Merkmale und die äußere Gestalt der Zwischenschichten (b) hervorrufen; entscheidend ist, daß nach der besonderen Herstellweise die Zwischenschichten (b) exakt reproduziert werden können.

Erfindungsgemäß geht die Herstellung der Zwischenschichten (b) von der Lösung eines Alkoxids oder mehrerer Alkoxide von einem oder von mehreren der Elemente aus der vorstehend genannten Gruppe in einem polaren, im wesentlichen $C_1$- bis $C_6$-Alkanole enthaltenden, flüssigen Medium aus. Hierzu werden die Alkoxide im Verfahrensschritt 2.1 in den polaren flüssigen Medien gelöst. Vorteilhafterweise wird dieser Verfahrensschritt unter Inertgas ausgeführt, wobei ansonsten die üblichen und bekannten Misch- und Lösungstechniken angewendet werden.

Hierbei werden vor allem Alkoxide verwendet, welche sich von $C_1$- bis $C_6$-Alkanolen, wie etwa Methanol, Ethanol, n-Propanol, Isopropanol, n-Butanol, sek.-Butanol, tert.-Butanol, n-Pentylalkohol, Isopentylalkohol, Neopentylalkohol, n-Hexanol, Hexan-2-ol, Hexan-3-ol, Cyclopentanol oder Cyclohexanol, ableiten. Demgemäß enthalten die betreffenden Alkoxide der genannten Elemente Methoxi-, Ethoxi-, n-Propyloxi-, Propyl-2-oxi-, Butyl-1-oxi-, Butyl-2-oxi-, tert.-Butoxi-, Pentyl-1-oxi-, Isopentyloxi-, Neopentyloxi-, Hexyl-1-oxi-, Hexyl-2-oxi-, Hexyl-3-oxi-, Cyclopentyloxi- und/oder Cyclohexyloxireste, von denen die Methoxi-, Ethoxi- und Isopropyloxireste bevorzugt und die Methoxi- und Ethoxireste ganz besonders bevorzugt sind.

Dabei kann ein vorgegebenes Alkoxid eines der Elemente aus der genannten Gruppe gleiche oder unterschiedliche Alkoxidreste aufweisen, wie etwa Methoxi- und Ethoxireste. Das Alkoxid kann aber auch nur eine Art von Alkoxidrest aufweisen, wie etwa nur Methoxi- oder nur Ethoxireste. Es können indes auch Gemische aus unterschiedlichen Alkoxiden des einen Elements gemeinsam verwendet werden, wie etwa das Methoxid und das Ethoxid.

Außerdem kommen Gemische aus Alkoxiden unterschiedlicher Elemente in Betracht, wobei die Alkoxide entweder Alkoxidreste gleicher Art - wie etwa Methoxi- oder Ethoxireste - oder unterschiedlicher Art - wie etwa Methoxi- und Ethoxireste - enthalten können.

Die Verwendung eines Alkoxids eines einzigen Elements, welches lediglich gleiche Alkoxidreste aufweist, wird bevorzugt. Demnach handelt es sich bei den besonders bevorzugten Alkoxiden um die Methoxide oder um die Ethoxide von Titan, Zirkonium, Hafnium, Thorium, Vanadin, Niob, Tantal, Wolfram, Aluminium, Gallium, Indium, Silizium, Germanium oder von Zinn. Von diesen sind wiederum die Methoxide oder die Ethoxide von Titan, Zirkonium, Aluminium, Silizium oder von Zinn ganz besonders bevorzugt.

Diese Alkoxide sind bekannt und können nach den Methoden hergestellt werden, welche in Houben-Weyl, Methoden der Organischen Chemie, Band VI/2, Sauerstoffverbindungen I, Teil 2, Georg Thieme Verlag, Stuttgart, 1963, auf den Seiten 5 bis 34 im Detail beschrieben sind.

Unter einem polaren flüssigen Medium werden Flüssigkeiten verstanden, welche Stoffe enthalten, die zu Dipol-Dipol-, Dipol-Ion- oder Ion-Ion-Wechselwirkungen befähigt sind. Im Rahmen der vorliegenden Erfindung enthalten diese Medien im wesentlichen $C_1$- bis $C_6$-Alkanole, wobei hier vor allem die vorstehend genannten Alkanole, von denen sich die Alkoxidreste herleiten, in Betracht kommen. Von diesen Alkanolen sind Methanol, Ethanol und Isopropanol bevorzugt und Methanol und Ethanol ganz besonders bevorzugt.

Darüber hinaus können diese Medien geeignete Zusatzstoffe enthalten. Diese Zusatzstoffe, welche der Einstellung der Viskosität, des pH-Wertes, der Verdampfungsrate oder der Beschleunigung oder Verzögerung der Alkoholabspaltung aus den Alkoxiden dienen können, müssen in den Medien molekulardispers löslich sein, dürfen mit den übrigen Komponenten im Laufe der Zeit keine unlöslichen Produkte bilden und dürfen, sofern sie in der Zwischenschicht (b) nach deren Herstellung noch vorhanden sind, das Eigenschaftsprofil der Schicht nicht nachteilig verändern. Beispiele geeigneter Zusatzstoffe sind höhersiedende Alkohole wie Octanol; Glykolether wie Diethylenglykolmonomethylether; Ketone wie Aceton, Methylethylketon oder Methylisobutylketon; Ester wie Essigsäuremethylester, Essigsäureethylester oder Essigsäureisopropylester; oder Ammoniak, Hydrazin oder Amine wie Methyl-, Dimethyl- oder Trimethylamin, Ethyl-, Diethyl- oder Triethylamin oder Ethyldimethylamin. Die Menge der Zusatzstoffe soll im allgemeinen nicht mehr als 20 Gew.% des flüssigen Mediums ausmachen.

Die Menge an Alkoxiden, welche in diesen polaren flüssigen Medien gelöst wird, kann breit variieren. Sie richtet sich vor allem nach der gewünschten Dicke der Zwischenschicht (b) und nach dem Verfahren des Auftragens der Lösung auf die Oberfläche des Trägers (a) im Verfahrensschritt 2.2. Im allgemeinen liegt diese Menge bei 0,5 bis 10 Gew.%, bezogen auf die Gesamtmenge der Lösung.

Das Auftragen der Lösung im Verfahrensschritt 2.2 weist keine methodischen Besonderheiten auf, sondern erfolgt nach den üblichen und bekannten Methoden zur Herstellung dünner, flüssiger Schichten mittels Schleuderbeschichtung (spin coating), Tauchbeschichtung (dip coating), Extrusionsbeschichtung oder mittels Beschichten mit Hilfe einer Rakel, einer Bürste, einer Walze oder einer Siebdruckform oder durch Aufsprühen. Dem Aufschleudern (spin coating) wird hierbei der Vorzug gegeben.

Hiernach wird die auf der Trägeroberfläche befindliche, dünne, lösungsmittelfeuchte Schicht im Verfahrensschritt 2.3 durch Tempern in die Zwischenschicht (b) umgewandelt. Dazu wird in aller Regel die lösungsmittelfeuchte Schicht zunächst bei Temperaturen unterhalb 50°C, vorzugsweise unterhalb 40°C, durch Trocknen, z.B. in einem Umlufttrockenschrank, von der Hauptmenge des polaren, flüssigen Mediums befreit, so daß eine Schicht resultiert, die im wesentlichen die Alkoxide enthält. Indessen kann auch die lösungsmittelfeuchte Schicht unmittelbar nach ihrem Auftrag ohne Vortrocknung getempert werden.

Die Temperung wird in Gegenwart von Wasser bei 50 bis 120°C während 5 Minuten bis 2 Stunden durchgeführt. Dabei wird die feuchte Schicht oder die Alkoxidschicht in die Zwischenschicht (b) umgewandelt.

Werden hierbei Temperaturen von weniger als 50°C angewendet, so bilden sich in der angegebenen Zeit Schichten aus, welche nicht das gewünschte Eigenschaftsprofil, sondern schwerwiegende Nachteile wie einen hohen Alkoxidgehalt, mangelnde Luft- und Lösungsmittelstabilität, geringe mechanische Festigkeit und Haftfähigkeit aufweisen. Werden dagegen Temperaturen von über 120°C angewendet, so wird der Träger (a), insbesondere in seiner feinen Oberflächenstruktur, nachhaltig geschädigt. Außerdem resultieren dann keine Schichten der gewünschten Zusammensetzung und des gewünschten Eigenschaftsprofils, sondern die Schichten sind spröde, neigen zur Rißbildung und können sich sogar vom Träger (a) ganz ablösen. Demnach lassen sich Zwischenschichten (b) nur bei Temperaturen von 50 bis 120°C in zuverlässiger Weise herstellen und exakt reproduzieren. Besonders gute Ergebnisse erhält man bei Temperaturen von 60 bis 100°C, insbesondere 70 bis 90°C.

Dabei soll im allgemeinen eine Temperzeit von 5 Minuten nicht unterschritten werden, weil sich ansonsten Schichten minderer Qualität bilden. Temperzeiten über 2 Stunden bringen der dann resultierenden Zwischenschicht (b) keine zusätzlichen Vorteile, sondern haben lediglich einen höheren Energieverbrauch und Zeitaufwand zur Folge, was sowohl wirtschaftlich als auch produktionstechnisch von Nachteil ist.

Das Tempern der Alkoxidschicht wird in Gegenwart von Wasser durchgeführt. Hierbei genügen oftmals schon sehr geringe Wassermengen von unter 1 Gew.%, bezogen auf die Alkoxidschicht, um die Umwandlung der Alkoxidschicht in die Zwischenschicht (b) rasch und zuverlässig zu bewerkstelligen. Es können indes auch größere Wassermengen angewendet werden. Die optimale Menge kann anhand einfacher Vorversuche ermittelt werden. Sie richtet sich in erster Linie nach der Reaktivität der verwendeten Alkoxide, der Temperzeit und der Temperatur; sie kann sich auch nach den speziellen Oberflächeneigenschaften des verwendeten Trägers (a) richten.

Hierbei kann das Wasser zur lösungsmittelfeuchten oder zu der weitgehend lösungsmittelfreien Alkoxidschicht als Flüssigkeit zugegeben werden. Dies kann durch Aufsprühen oder Aufgießen von Wasser auf die Schicht erfolgen. Es ist indes von Vorteil, das Tempern der weitgehend lösungsmittelfreien Alkoxidschicht in einer wasserdampfhaltigen Atmosphäre durchzuführen, welche über der Schicht zirkuliert und deren Wasserdampfgehalt in geeigneter Weise reguliert wird. Dabei ist es zusätzlich von Vorteil, zu Beginn des

7

Temperns einen hohen Wasserdampfgehalt einzustellen und diesen im Laufe der Temperzeit allmählich oder rasch auf einen Gehalt von 0 % oder nahe 0 % abzusenken.

Gegebenenfalls kann das Wasser Spuren von Ammoniak, Hydrazin oder von Aminen wie Methylamin, Dimethylamin, Trimethylamin, Ethylamin, Diethylamin, Triethylamin, Pyridin, Pyrazin, Pyrrol, Imidazol, Pyrimidin, Piperazin, Pyrazolidin, Imidazolidin, Pyrrolidin oder Morpholin enthalten. Unter "Spuren" ist hierbei ein Amingehalt des Wassers von unter 1 Gew.% zu verstehen.

Für das Tempern werden an und für sich keine eigens hierfür entwickelten Anlagen benötigt, sondern es wird in üblichen und bekannten Geräten, wie z.B. Umlufttrockenschränken oder Trockenstraßen, diskontinuierlich oder kontinuierlich durchgeführt.

Ein weiterer Bestandteil des erfindungsgemäßen Aufzeichnungsmaterials ist der dimensionsstabile, optisch klare, aus Kunststoffen aufgebaute Träger (a) mit strukturierter Oberfläche.

Träger dieser Art sind an sich bekannt. Im allgemeinen haben sie die Form flacher Scheiben eines Durchmessers von 90 oder 130 mm, wie sie für Datenplatten generell in Betracht kommen. Sie werden im allgemeinen durch formgebende Bearbeitung von Kunststoffen oder Kunststoffvorprodukten hergestellt.

Üblicherweise erfolgt hierbei die formgebende Bearbeitung von Kunststoffen durch Spritzgießen einer Kunststoffschmelze, wogegen bei der formgebenden Bearbeitung von Kunststoffvorprodukten - wie Epoxidharzen oder durch Photopolymerisation vernetzbaren Gemischen - die vorzugsweise flüssigen Vorprodukte bekanntermaßen in eine Form gegossen und hiernach thermisch oder durch Belichtung mit aktinischem Licht gehärtet werden.

Dabei wird im allgemeinen der Verarbeitung durch den Spritzguß der Vorzug gegeben. Beispiele für den Träger (a) geeigneter Kunststoffe sind Polymethylmethacrylat, Polycarbonat, Polyvinylchlorid oder Vinylchloridcopolymere, Polystyrol, Polystyrol-Polyphenylenether-Gemische, Polyethylenterephthalat oder Styrol-Acrylnitril-Copolymerisate.

Wesentlicher Bestandteil des erfindungsgemäßen Aufzeichnungsmaterials ist ferner die Aufzeichnungsschicht (c).

Die Aufzeichnungsschicht (c) enthält einen oder mehrere Farbstoffe oder sie besteht aus diesen. Für den Fall, daß sie Farbstoffe enthält, sind diese im allgemeinen in geeigneten Bindemitteln, wie Polymethylmethacrylat, Polystyrol, Polyamid, Polyvinylalkohol, Methylcellulose, Polyvinylbutyral, Polyethylen, Polyisobutylacrylat oder Polyethylenoxid, fein dispergiert. Dabei können die Farbstoffe über ionische Bindungen oder über Metalle enthaltende Gruppen mit den Bindemitteln verbunden sein. Überdies können sie mit den Bindemitteln über kovalente Bindungen verknüpft sein, wie beispielsweise in seitenständige Farbstoffreste enthaltenden, flüssigkristallinen Polymeren, oder sie sind Bestandteil der Polymerhauptkette der Bindemittel. Darüber hinaus können noch niedermolekulare oder hochmolekulare flüssigkristalline Verbindungen zugegen sein.

Geeignete Farbstoffe für die Aufzeichnungsschicht (c) können allen Farbstoffklassen entstammen. Beispiele von Farbstoffenklassen, denen besonders viele gut geeignete Farbstoffe entstammen, sind die Klassen der Azo-, Naphthol-, Pyrazolon-, Stilben-, Thiazol-, Anthrachinon-, Anthron-, Indigo-, Acridin-, Triphenylmethan-, Metallchelat-, Xanthen-, Thioxanthen-, Oxazin-, Phthalocyanin-, Polymethin-, Trichinocyclopropan- oder der Squaryliumfarbstoffe.

Die Aufzeichnungsschicht (c) ist im allgemeinen 50 bis 200 nm, vorzugsweise 80 bis 160 nm und insbesondere 100 bis 130 nm dick.

Die Aufzeichnungsschicht (c) wird durch das Auftragen einer Lösung, welche den oder die Farbstoffe und die gegebenenfalls vorhandenen übrigen Bestandteile enthält, auf die Oberfläche der Zwischenschicht (b) und Trocknen der so erhaltenen lösungsmittelfeuchten Schicht hergestellt. Dabei können die vorstehend genannten üblichen und bekannten Methoden der Herstellung flüssiger dünner Schichten angewendet werden. Als Lösungsmittel kommen hierbei die üblichen und bekannten, polaren und unpolaren organischen Lösungsmittel, wie Alkohole, Ketone, Ester, Ether, aliphatische oder aromatische Kohlenwasserstoffe oder halogenierte Kohlenwasserstoffe, in Betracht.

Neben Träger (a), Zwischenschicht (b) und Aufzeichnungsschicht (c) können die erfindungsgemäßen Aufzeichnungsmaterialien weitere Schichten enthalten, welche gleichfalls für die Funktion der Aufzeichnungsmaterialien von Bedeutung sein können, wie etwa übliche und bekannte Reflektionsschichten, Antireflektionsschichten oder Haftschichten oder Schichten, die sich beim Erhitzen zersetzen und Gase bilden. Außerdem können den Aufzeichnungsschichten (c) noch optisch klare Schutzschichten aufliegen, welche verhindern, daß Schmutzpartikel oder Kratzer im Laserfokus zu liegen kommen. Im allgemeinen werden hierfür übliche und bekannte Polymerisate oder Siliziumdioxid verwendet. Zu diesem Zweck kann das erfindungsgemäße Aufzeichnungsmaterial auch noch mit einer optisch klaren Abdeckhaube in üblicher und bekannter Weise, wie etwa durch Ultraschallschweißen, verbunden werden.

Zwei erfindungsgemäße Aufzeichnungsmaterialien können außerdem paarweise so miteinander verbunden werden, daß ihre Aufzeichnungsschichten (c) einander parallel zugekehrt sind und ein gewisser Abstand zwischen ihnen herrscht. Dieser Abstand kann in üblicher und bekannter Weise mit Hilfe von Abstandshaltern, wie Stegen oder kleinen Säulen, eingestellt werden. Ein einzelnes erfindungsgemäßes Aufzeichnungsmaterial kann aber auch zwei Aufzeichnungsschichten (c) auf den einander gegenüberliegenden Seiten des Trägers (a) aufweisen.

Die erfindungsgemäßen Aufzeichnungsmaterialien werden mittels eines Schreiblaserstrahls mit analogen oder digitalen Daten beschrieben, wobei man zum Einschreiben analoger Daten bekanntermaßen einen analog modulierten Dauerstrichlaser und zum Einschreiben digitaler Daten einen impulsmodulierten Laser verwendet.

Im allgemeinen weisen geeignete Laser bei der Schreibwellenlänge $\lambda$ eine Strahlleistung von 1 bis 20 mW auf. Der Fokus-Durchmesser des Schreiblaserstrahls liegt im allgemeinen bei 300 bis 2000 nm. Im allgemeinen beträgt die Impulsdauer bei der Bestrahlung mit einem impulscodierten Laser 10 bis 1000 ns. Vorteilhafterweise verwendet man zum Einschreiben einen Laserstrahl von Licht der Wellenlänge $\lambda$, welches von der betreffenden Aufzeichnungsschicht (c) gut absorbiert wird. Vorteilhaft sind Wellenlängen $\lambda$ von 400 bis 1000 nm.

Beim Schreibvorgang wird der Laserstrahl in relativer Bewegung über das Aufzeichnungsmaterial hinweggeführt und trifft dabei senkrecht auf dieses auf, wobei er auf die Aufzeichnungsschicht (c) fokussiert ist. An der Auftreffstelle wird die Aufzeichnungsschicht (c) lokal erhitzt, und es entstehen thermisch veränderte Bereiche, beispielsweise in der Form von Löchern, Kratern, Flecken oder Reliefstrukturen. Beim Einschreiben von Daten mit impulsmodulierten Lasern haben diese Bereiche im wesentlichen eine runde oder ovale Grundfläche eines Durchmessers von 100 bis 2000 nm, beim Einschreiben mit einem analog modulierten Dauerstrichlaser können sie beliebige geformte Grundflächen haben.

Die erfindungsgemäßen Aufzeichnungsmaterialien eignen sich ausgezeichnet für die ablative und die deformative laseroptische Datenaufzeichnung. Darüber hinaus eignen sie sich hervorragend für die laseroptische Datenaufzeichnung durch Phasenumwandlung. Hierbei werden die Daten in Form von thermisch veränderten Bereichen eingeschrieben, deren Reflektivität gegenüber den unbeschriebenen Bereichen außerordentlich erhöht ist, wodurch ein besonders starker optischer Kontrast erzielt wird.

Das Schreiben der Daten in die Aufzeichnungsschicht (c) kann von der dem Träger (a) abgewandten Seite der Schicht her oder durch den optisch klaren Träger (a) hindurch erfolgen. Letzteres ist von besonderem Vorteil.

Die eingeschriebenen Daten werden mit Hilfe eines Leselaserstrahls gelesen. Die Strahlleistung des Leselasers bei der Lesewellenlänge $\lambda'$ liegt unterhalb der Schwellenleistung, ab der ein Beschreiben möglich wird. Im allgemeinen liegt die Strahlleistung bei 0,1 bis 2 mW. Vorteilhafterweise verwendet man Laserlicht der Wellenlänge $\lambda'$, welches von der Aufzeichnungsschicht stark reflektiert wird. Vorteilhaft sind Wellenlängen $\lambda'$ von 400 bis 1000 nm, insbesondere 630 bis 900 nm.

Auch beim Lesevorgang wird der Leselaserstrahl in relativer Bewegung über das Aufzeichnungsmaterial hinweggeführt und trifft senkrecht auf dieses auf, wobei er auf die Aufzeichnungsschicht (c) fokussiert ist.

Trifft der Leselaserstrahl beim Überstreichen der Aufzeichnungsschicht (c) auf einen thermisch veränderten Bereich, beispielsweise einen Fleck, so ändern sich die Eigenschaften des vom Aufzeichnungsmaterial transmittierten oder reflektierten Lichts, was mit Hilfe geeigneter Detektoren nachgewiesen werden kann.

Dabei kann das Lesen der Daten in der Aufzeichnungsschicht (c) von der dem Träger (a) abgewandten Seite der Schicht her oder durch den optisch klaren, transparenten Träger (a) hindurch erfolgen, wobei letzteres von Vorteil ist. Hierbei ist es besonders vorteilhaft, das reflektierte Licht zu erfassen.

Außerdem ist es von ganz besonderem Vorteil, hierzu Schreib- und Leselaser zu verwenden, welche Laserstrahlung im infraroten Wellenlängenbereich von 630 bis 900 nm ausstrahlen. Dabei ist es außerdem von Vorteil, wenn die Schreibwellenlänge $\lambda$ mit der Lesewellenlänge $\lambda'$ identisch ist oder sich nur wenig von ihr unterscheidet. Licht dieser Wellenlängen wird von üblichen und bekannten Halbleiter-Lasern geliefert.

Die erfindungsgemäßen Aufzeichnungsmaterialien werden somit in erfindungsgemäß bevorzugter Verfahrensweise mit impulsmoduliertem Laserlicht der Wellenlänge $\lambda$ von 630 bis 900, insbesondere 740 bis 850 nm, durch den optisch klaren, transparenten Träger (a) hindurch beschrieben.

Danach werden die beschriebenen Aufzeichnungsmaterialien in erfindungsgemäß bevorzugter Verfahrensweise mit Laserlicht der Wellenlänge $\lambda'$ von 630 bis 900, insbesondere 740 bis 850 nm, von der Seite des optisch klaren, transparenten Trägers (a) her ausgelesen, wobei man das von der Aufzeichnungsschicht (c) reflektierte Licht erfaßt.

Liegen die erfindungsgemäßen Aufzeichnungsmaterialien als Datenplatten vor, so werden für das Schreiben und Lesen digitaler Daten die üblichen und bekannten Plattenlaufwerke verwendet. Ein solches Plattenlaufwerk enthält im wesentlichen einen Plattendrehteller und einen laseroptischen Schreib- und Lesekopf, dazu noch mechanische Servoeinrichtungen zur Korrektur der Spurlage, Autofokussiereinrichtungen, optische Elemente zur Analyse von Spurlagen- und Autofokusfehlern, Detektoreinrichtungen mit vorgeschalteten optischen Komponenten zur Erfassung des von den Datenplatten zurückreflektierten Lichts des Leselaserstrahls sowie geeignete elektronische Bauteile. Üblicherweise enthält ein laseroptischer Schreib- und Lesekopf Laserdioden, welche Infrarotlicht emittieren, und aus Halbleitermaterialien mit GaAlAs bestehen. Darüber hinaus weist ein solcher Schreib- und Lesekopf im allgemeinen noch weitere geeignete optische Bauteile wie dielektrische Strahlteiler, Polarisationsstrahlteiler oder polarisationsunabhängige Strahlteiler sowie eine $\lambda$/4- oder $\lambda$/2-Platte auf.

Die erfindungsgemäßen Aufzeichnungsmaterialien weisen zahlreiche besondere Vorteile auf.

So sind sie in einfacher Weise herstellbar, wobei ihr Eigenschaftsprofil besonders leicht und stets zuverlässig reproduziert werden kann. Insbesondere lassen sich die Dicke und die Zusammensetzung ihrer Zwischenschicht (b) exakt einstellen, so daß deren Eigenschaftsprofil in hervorragender Weise den übrigen physikalischen und stofflichen Parametern angepaßt werden kann.

Darüber hinaus bewirken die Zwischenschichten (b) eine bessere Haftung der Aufzeichnungsschichten (c) auf den Trägern (a). Überdies unterdrücken sie wirksam das schädliche Auskristallisieren der Farbstoffe in den Aufzeichnungsschichten (c) und tragen somit zu einer Verlängerung der Lebensdauer der Aufzeichnungsmaterialien in einem erheblichen Umfang bei.

Die Zwischenschichten (b) der erfindungsgemäßen Aufzeichnungsmaterialien verfälschen auch nicht die Oberflächenstruktur der Träger (a), welche essentiell für das "tracking" sind. Die Spurlagenservo- und Autofokussiereinrichtungen der üblichen und bekannten Plattenlaufwerke funktionieren daher bei den erfindungsgemäßen Aufzeichnungsmaterialien in sehr exakter Weise. Dabei sprechen die Spurlagenservo- und Autofokussiereinrichtungen auf die erfindungsgemäßen Aufzeichnungsmaterialien sogar besser an als auf Aufzeichnungsmaterialien, welche keine oder lediglich bekannte Zwischenschichten enthalten.

Insgesamt weisen die erfindungsgemäßen Aufzeichnungsmaterialien eine erhöhte Lebensdauer auf, können mit vergleichsweise geringer Laserleistung beschrieben werden und haben ein Signal-Rausch-Verhältnis von über 45 dB.

Wegen ihrer besonders hohen Bit-Dichte und ihrer ausgesprochen niedrigen Bitfehlerrate eignen sich die Aufzeichnungsmaterialien hervorragend für das Aufzeichnen von Videosignalen. Darüber hinaus sind sie auch als Archivdatenplatten geeignet.

Beispiele

Bei den folgenden Beispielen und Vergleichsversuchen wurde die Dicke der einzelnen Schichten an rasterelektronenmikroskopischen Aufnahmen bestimmt.

Die stoffliche Zusammensetzung der Zwischenschichten (b) wurde mit Hilfe der ESCA-Methode bestimmt. Hierzu wurden die Zwischenschichten (b) der $MgK_{\alpha}$-Röntgenstrahlung (E = 1253,6 eV) ausgesetzt.

Das Signal-Rausch-Verhältnis wurde in bekannter Weise an Aufzeichnungsmaterialien ermittelt, welche mit Hilfe eines impulsmodulierten Lasers (Wellenlänge $\lambda$ des emittierten Lichts: 830 nm; Pulsdauer 500 ns; Lichtleistung: 6 mW) beschrieben worden waren. Hierzu wurden die Aufzeichnungsmaterialien mit Hilfe eines Dauerstrich-Lasers (Wellenlänge $\lambda'$ des emittierten Lichts: 780 nm; Lichtleistung: 0,5 mW) durch den Träger hindurch gelesen. Der emittierte Leselaserstrahl wurde dabei stets mit der relativen Geschwindigkeit von 4 m/s über die Aufzeichnungsschichten hinweggeführt. Dabei wurde stets das von den Aufzeichnungsmaterialien reflektierte Licht erfaßt und analysiert.

In den folgenden Beispielen und Vergleichsversuchen wurden Träger (a) verwendet, welche auf ihrer Oberfläche übliche und bekannte, konzentrische Spurrillen enthielten. Deren Vertiefungen werden im allgemeinen als "grooves" und ihre erhabenen Teile im allgemeinen als "land" bezeichnet. Die Spurrillen dienen der exakten Führung der Schreib- und Leselaserstrahlen, welche vom laseroptischen Schreib- und Lesekopf des Plattenlaufwerks emittiert werden. Hierzu ist es notwendig, daß die im laseroptischen Kopf vorhandenen Spurlagenservoeinrichtungen scharfe optische Signale erhalten. Diese Signale entstehen durch Beugung des vom Aufzeichnungsmaterial zu dem laseroptischen Kopf zurückreflektierten Laserlichts an der Grenze zwischen "groove" und "land", wobei man zur Erfassung und Analyse dieser Lichtsignale die hierfür üblichen und bekannten Photodiodenanordnungen verwendet. Für das "tracking"-Verhalten, d.h. die exakte Führung, insbesondere der Leselaserstrahlen, ist es wesentlich, daß ein hoher optischer Kontrast zwischen "land" und "groove" besteht, weil ansonsten nur schwache und verbreiterte oder gar keine Signale mehr erhalten werden. Letzteres ist oftmals bei beschriebenen Aufzeichnungsmaterialien der Fall. Dies führt aber zu einem geringen Signal-Rausch-Verhältnis und erschwert das Wiederauffinden eingeschriebener Daten. Als Maß für die Güte des "trackings" wird daher im allgemeinen die Breite der Signale sowie der Unterschied in der Intensität des von einem "groove" und von einem "land" reflektierten Laserlichts angenommen. Ein zusätzliches Qualitätskriterium ist, ob dieser Intensitätsunterschied über den gesamten Durchmesser des Aufzeichnungsmaterials hinweg konstant und hoch ist.

Demnach wurde im folgenden das "tracking"-Verhalten der Aufzeichnungsmaterialien über das Lesen der Materialien mit einem Leselaserstrahl ($\lambda'$ = 780 nm; Lichtleistung: 0,5 mW) quer zu den Spurrillen ermittelt. Hierbei wurde über den gesamten Durchmesser des Aufzeichnungsmaterials hinweg gemessen. Das dabei reflektierte Laserlicht wurde mit Hilfe üblicher und bekannter optischer Anordnungen erfaßt, Photodioden zugeleitet und durch geeignete elektronische Bauelemente in elektrische Signale umgewandelt, deren Höhe als Funktion des Durchmessers aufgezeichnet wurde. Es wurde beurteilt, ob die Unterschiede zwischen der Höhe der von den "lands" erhaltenen Signale und der von den "grooves" erhaltenen Signale über den gesamten Durchmesser des Aufzeichnungsmaterials hinweg konstant scharf und hoch waren, und es wurde aus der Beurteilung die folgende Benotung des "tracking"-Verhaltens gebildet:

| | |
|---|---|
| "sehr gut" | scharfe Signale; hoher Unterschied zwischen den Höhen der "land"- und "groove"-Signale, welcher über den gesamten Durchmesser hinweg konstant ist; |
| "gut" | verbreitete Signale; geringer Unterschied zwischen den betreffenden Signalhöhen, welcher über den gesamten Durchmesser hinweg nur wenig variiert; |
| "unbefriedigend" | breite, verwaschene Signale; geringer Unterschied zwischen den betreffenden Signalhöhen; gegebenenfalls variiert dieser Unterschied auch noch über den gesamten Durchmesser hinweg mehr oder weniger stark; |
| "schlecht" | kein Unterschied mehr zwischen den betreffenden Signalhöhen. |

Um zu prüfen, ob das Beschreiben der Aufzeichnungsmaterialien eine Veränderung in ihrem "tracking"-Verhalten zur Folge hatte, wurden sowohl die unbeschriebenen als auch die beschriebenen Aufzeichnungsmaterialien in der oben erläuterten Weise vermessen und benotet. Ergaben sich hierbei gravierende Unterschiede in der "tracking"-Qualität eines Aufzeichnungsmaterials im unbeschriebenen Zustand einerseits und im beschriebenen Zustand andererseits, so stellte dies einen schwerwiegenden Nachteil dar. War dieser Qualitätsunterschied, von einem hohen Niveau aus ausgehend, gering, so belegte dies die besondere Vorteilhaftigkeit des betreffenden Aufzeichnungsmaterials.

Beispiele 1 bis 25

A. Herstellung von erfindungsgemäßen laseroptischen Datenplatten; allgemeine Herstellvorschrift:

Für die Herstellung der Datenplatten wurden die üblichen und bekannten, mit konzentrischen Spurrillen versehenen, durch Spritzguß hergestellten, 1,2 mm dicken und 130 mm durchmessenden, optisch klaren Polycarbonatscheiben als Träger (a) verwendet.

Auf die strukturierte Oberfläche dieser Träger (a) wurden Lösungen aus Alkoxiden und einem Methanol/Ethanol-Gemisch (Volumenverhältnis 2:3) so aufgeschleudert (spin coating), daß nach dem Trocknen der naßen Schichten bei 40°C in einem Umlufttrockenschrank Alkoxidschichten mit Dicken zwischen 60 und 120 nm resultierten. Im Falle der Beispiele 2 bis 5 enthielten die betreffenden Methanol/Ethanol-Gemische noch Zusatzstoffe, wie Diethylenglykolmonomethylether, Ammoniak oder Trimethylamin.

Die auf den Trägern (a) befindlichen Alkoxidschichten wurden dann bei Temperaturen zwischen 50 und 120°C in einem Umlufttrockenschrank, durch welchen Luft einer relativen Feuchte von 75 % zirkulierte, getempert. Im Falle der Beispiele 3 bis 5 enthielt die Luft noch 20 ppm an Ammoniak, Trimethylamin oder Imidazol.

In dieser Weise resultierten Träger (a) mit Zwischenschichten (b) auf ihrer strukturierten Oberfläche.

Nach dieser allgemeinen Vorschrift wurden bei jedem Beispiel jeweils drei Datenplatten hergestellt, von denen jeweils eine der Analyse der Zwischenschicht (b) diente (Proben 1). Die übrigen zwei Datenplatten (Proben 2 und 3) wurden jeweils in gleicher Weise weiterverarbeitet und dienten somit als Beleg für die gute Reproduzierbarkeit des Herstellverfahrens.

Die Analyse der Zwischenschichten (b) erfolgte durch rasterelektronenmikroskopische Aufnahmen und durch ESCA-Messungen an den Proben 1.

Auf die in dieser Weise erhaltenen Zwischenschichten (b) der Proben 2 und 3 wurde eine Mischung aus, bezogen auf die Lösung,

3 Gew.% des Farbstoffs Tris-(3,5-diisopropylchino)cyclopropan (vgl. die EP-A-0 193 892),

1 Gew.% Methylmethacrylat/Methacrylsäure (70:30)-Copolymerisat (polymeres Bindemittel) und

96 Gew.% Chloroform (Lösungsmittel)

so aufgeschleudert (spin coating), daß nach dem Trocknen amorphe, Farbstoffe enthaltende Aufzeichnungsschichten (c) einer Trockenschichtdicke von 100 nm resultierten.

Die stofflichen und physikalischen Parameter des Herstellverfahrens finden sich in der Tabelle 1. Dort sind auch die Ergebnisse der Untersuchungen an den nach dem erfindungsgemäßen Verfahren hergestellten Zwischenschichten (b) zusammengefaßt.

B. Prüfung der erfindungsgemäßen laseroptischen Datenplatten (Proben 2 und 3):

Zunächst wurde das "tracking"-Verhalten der unbeschriebenen Datenplatten nach der vorstehend angegebenen Methode ermittelt und benotet. Hiernach wurden die Datenplatten mit Daten beschrieben. Hierzu verwendete man einen impulsmodulierten Laserstrahl der vorstehend genannten Spezifikation. Danach wurde das Signal-Rausch-Verhältnis und das "tracking"-Verhalten der beschriebenen Datenplatten in der vorne geschilderten Weise ermittelt.

Die Ergebnisse dieser Versuche finden sich in der Tabelle 2. Außerdem wird angegeben, ob das Verfahren bei den einzelnen Beispielen ein exakt reproduzierbares Eigenschaftsprofil der Datenplatten lieferte.

Vergleichsversuch V1

Herstellung und Prüfung einer bekannten laseroptischen Datenplatte; Herstell- und Prüfvorschrift:

Beispiel 1 wurde wiederholt, nur daß anstelle der dort beschriebenen Zwischenschicht (b) 500 nm dicke Zwischenschichten verwendet wurden, welche nach Beispiel 5 der US-A-4 622 261 hergestellt worden waren.

Die stofflichen und physikalischen Parameter des bekannten Herstellverfahrens werden in Tabelle 1 den erfindungsgemäßen Parametern gegenübergestellt.

Die Prüfung erfolgte wie bei den Beispielen 1 bis 25 angegeben. Die Prüfergebnisse werden in der Tabelle 2 den an den erfindungsgemäßen Datenplatten 1 bis 25 (Proben 2 und 3) erhaltenen Ergebnissen gegenübergestellt.

Der Vergleich zeigt, daß das Eigenschaftsprofil der bekannten Datenplatten V1 schlecht zu reproduzieren war und insgesamt bei weitem nicht an das Eigenschaftsprofil der erfindungsgemäßen Datenplatten heranreichte.

Vergleichsversuch V2

Herstellung und Prüfung einer bekannten laseroptischen Datenplatte; Herstell- und Prüfvorschrift:

Beispiel 1 wurde wiederholt mit dem Unterschied, daß anstelle der dort beschriebenen Zwischenschicht (b) 55 nm dicke, aufgedampfte Siliziumdioxidschichten verwendet wurden.

Die stofflichen und physikalischen Parameter des bekannten Herstellverfahrens werden in Tabelle 1 den erfindungsgemäßen Parametern gegenübergestellt.

Die Prüfung erfolgte wie bei den Beispielen 1 bis 25 angegeben. Die Prüfergebnisse werden in der Tabelle 2 den an den erfindungsgemäßen Datenplatten 1 bis 25 (Proben 2 und 3) erhaltenen Ergebnisse gegenübergestellt.

Der Vergleich zeigt, daß sich das Eigenschaftsprofil der bekannten Datenplatten V2 zwar gut reproduzieren ließ, daß es aber ansonsten nicht an das Eigenschaftsprofil der erfindungsgemäßen Datenplatten heranreichte.

Tabelle 1: Die Herstellung erfindungsgemäßer und nicht erfindungsgemäßer laseroptischer Datenplatten, Parameter der Herstellverfahren

| Beispiel und Daten- platte (jeweils 3 Proben) Nr. | Zwischenschicht (b) | | | | | | |
|---|---|---|---|---|---|---|---|
| | Herstellung: | | Temperung: | | Eigenschaften (ermittelt an der Probe 1) | | |
| | Alkoxid | Zusatzstoffe | Zeit und Temperatur | Zusatz- stoff zur Luft | Dicke | Zusammensetzung | |
| | | | | | | Oxid/Oxid- hydrat | Kohlenwasser- stoffreste |
| | $(Gew.\%)[1]$ | $(Gew.\%)[1]$ | | | (nm) | $(Gew.\%)[2]$ | $(Gew.\%)[2]$ |
| 1 | $Si(OCH_3)_4$ (3) | | 5 min bei $110^0C$ | – | 55 | 95,5 | 4,5 |
| 2 | $Si(OCH_3)_4$ (2,7) | $NH_3$ (0,5) | 20 min bei $80^0C$ 40 min bei $90^0C$ | – | 52 | 95,2 | 4,8 |
| 3 | $Si(OCH_3)_4$ (2) | $NH_3$ (0,6) | 120 min bei $50^0C$ | $NH_3$ | 60 | 88,5 | 11,5 |
| 4 | $Si(OCH_3)_4$ (3,1) | Diethylenglykol- monomethylether (2) | 10 min bei $120^0C$ | $N(CH_3)_3$ | 51 | 99,3 | 0,7 |
| 5 | $Si(OC_2H_5)_4$ (2,5) | $N(CH_3)_3$ (0,2) | 80 min bei $70^0C$ | Imidazol | 70 | 92,3 | 7,7 |
| 6 | $Si(OCH_3)_4$ (1,2) + $Si(O-i-C_3H_7)_4$ (1,8) | – | 15 min bei $60^0C$ 60 min bei $95^0C$ | – | 95 | 95,1 | 4,9 |

EP 0 301 405 B1

Tabelle 1: Fortsetzung

| Beispiel und Daten-platte (jeweils 3 Proben) | Zwischenschicht (b) | | | | | | |
|---|---|---|---|---|---|---|---|
| | Herstellung: | | Temperung: | | Eigenschaften (ermittelt an der Probe 1) | | |
| | Alkoxid | Zusatzstoffe | Zeit und Temperatur | Zusatz-stoff zur | Dicke | Zusammensetzung | |
| | | | | | | Oxid/Oxid-hydrat | Kohlenwasser-stoffreste |
| Nr. | (Gew.%)[1] | (Gew.%)[1] | | Luft | (nm) | (Gew.%)[2] | (Gew.%)[2] |
| 7 | $Ti(OC_2H_5)_4$ (2) | - | 5 min bei 100°C 10 min bei 120°C | - | 40 | 98,3 | 1,7 |
| 8 | $Zr(OCH_3)_4$ (3,6) | - | 20 min bei 70°C 40 min bei 90°C | - | 90 | 97 | 3 |
| 9 | $Hf(OC_2H_5)_4$ (1,9) | - | 30 min bei 80°C | - | 35 | 98,7 | 1,3 |
| 10 | $Th(OC_2H_5)_4$ (3) | - | 5 min bei 120°C | - | 40 | 99,4 | 0,6 |
| 11 | $VO(OC_2H_5)_3$ (2) | - | 10 min bei 90°C 30 min bei 110°C | - | 60 | 98 | 2 |
| 12 | $NbO(O-i-C_3H_7)_3$ (1,2) | - | 8 min bei 70°C 100 min bei 110°C | - | 57 | 94,3 | 5,7 |
| 13 | $TaO(O-i-C_3H_7)_3$ (2) | - | 10 min bei 115°C | - | 43 | 96 | 4 |

Tabelle 1: Fortsetzung

| Beispiel und Daten- platte (jeweils 3 Proben) | Zwischenschicht (b) | | | | | | |
|---|---|---|---|---|---|---|---|
| | Herstellung: | | Temperung: | | Eigenschaften (ermittelt an der Probe 1) | | |
| | Alkoxid | Zusatzstoffe | Zeit und Temperatur | Zusatz- stoff zur | Dicke | Zusammensetzung | |
| | | | | | | Oxid/Oxid- hydrat | Kohlenwasser- stoffreste |
| Nr. | (Gew.%)[1] | (Gew.%)[1] | | Luft | (nm) | (Gew.%)[2] | (Gew.%)[2] |
| 14 | $WO_2(OCH_3)_2$ (1,5) | - | 15 min bei 80°C | - | 45 | 99,4 | 0,6 |
| 15 | $Al(OCH_3)_3$ (2) | - | 120 min bei 55°C | - | 51 | 88,9 | 11,1 |
| 16 | $Al(OCH_3)_3$ (3,1) | - | 50 min bei 70°C | - | 53 | 92,7 | 7,3 |
| 17 | $Al(OCH_3)_3$ (2,8) | - | 20 min bei 90°C | - | 51 | 94,5 | 5,5 |
| 18 | $Al(OC_2H_5)_3$ (2,9) | - | 5 min bei 100°C 10 min bei 120°C | - | 57 | 96,8 | 3,2 |
| 19 | $Ga(OC_2H_5)_3$ (3) | - | 15 min bei 80°C | - | 47 | 93,4 | 6,6 |
| 20 | $In(OCH_3)_3$ (2,6) | - | 5 min bei 90°C 20 min bei 120°C | - | 63 | 97,2 | 2,8 |

EP 0 301 405 B1

Tabelle 1: Fortsetzung

| Beispiel und Datenplatte (jeweils 3 Proben) | Zwischenschicht (b) | | | | | | |
| | Herstellung: | | Temperung: | | Eigenschaften (ermittelt an der Probe 1) | | |
| | Alkoxid | Zusatzstoffe | Zeit und Temperatur | Zusatzstoff zur | Dicke | Zusammensetzung | |
| | | | | | | Oxid/Oxidhydrat | Kohlenwasserstoffreste |
| Nr. | (Gew.%)[1] | (Gew.%)[1] | | Luft | (nm) | (Gew.%)[2] | (Gew.%)[2] |
| 21 | $Ge(OC_2H_5)_4$ (4) | – | 20 min bei 70°C 60 min bei 90°C | – | 90 | 92,1 | 7,9 |
| 22 | $Sn(OCH_3)_4$ (3) | – | 120 min bei 60°C | – | 53 | 93 | 7 |
| 23 | $Sn(OC_2H_5)_4$ (3,1) | – | 40 min bei 70°C 60 min bei 80°C | – | 60 | 94,2 | 5,8 |
| 24 | $Sn(OCH_3)_4$ (2,9) – $Sn(OC_2H_5)_4$ (4) | – | 20 min bei 80°C 60 min bei 110°C | – | 59 | 96 | 4 |
| 25 | $Sn(OCH_3)_4$ (3,2) | – | 10 min bei 120°C | – | 70 | 97,4 | 2,6 |

EP 0 301 405 B1

Tabelle 1: Fortsetzung

| Beispiel und Datenplatte (jeweils 3 Proben) | Zwischenschicht (b) | | | | | | |
|---|---|---|---|---|---|---|---|
| | Herstellung: | | Temperung: | | Eigenschaften (ermittelt an der Probe 1) | | |
| | Alkoxid | Zusatzstoffe | Zeit und Temperatur | Zusatzstoff zur Luft | Dicke | Zusammensetzung | |
| | | | | | | Oxid/Oxidhydrat | Kohlenwasserstoffreste |
| Nr. | $(Gew.\%)$[1] | $(Gew.\%)$[1] | | | (nm) | $(Gew.\%)$[2] | $(Gew.\%)$[2] |
| Vgl.-versuch | | | | | | | |
| V1 | $Si(OCH_3)_4$ | – | 5 sec bei 2500°C | – | 500 | >99,8 | <0,1 |
| V2 | Aufdampfen von $SiO_2$ im Vakuum | | | | 55 | >99,9 | |

[1] bezogen auf die Gesamtmenge der alkoholischen Lösung

[2] bezogen auf die Zwischenschicht (b)

EP 0 301 405 B1

Tabelle 2: Eigenschaften der erfindungsgemäßen und der bekannten Aufzeichnungsmaterialien

| Beispiel und Datenplatte (jeweils 2 Proben) Nr. | "tracking-Verhalten" Vor dem Beschreiben: Probe 2 Note | Probe 3 Note | Nach dem Beschreiben: Probe 2 Note | Probe 3 Note | Signal-Rausch-Verhältnis Probe 2 dB | Probe 3 dB | Reproduzierbarkeit des Eigenschaftsprofils |
|---|---|---|---|---|---|---|---|
| 1 | sehr gut | sehr gut | sehr gut | sehr gut | 49 | 49 | sehr gut |
| 2 | sehr gut | sehr gut | sehr gut | sehr gut | 49 | 49 | sehr gut |
| 3 | sehr gut | sehr gut | sehr gut | gut-sehr gut | 46 | 44 | gut-sehr gut |
| 4 | sehr gut | sehr gut | gut-sehr gut | sehr gut | 45 | 48 | sehr gut |
| 5 | sehr gut | sehr gut | gut-sehr gut | gut-sehr gut | 46 | 46 | sehr gut |
| 6 | gut | gut | gut | gut | 45 | 46 | sehr gut |
| 7 | sehr gut | sehr gut | sehr gut | sehr gut | 50 | 49 | sehr gut |
| 8 | gut-sehr gut | gut-sehr gut | gut | gut | 47 | 45 | gut |
| 9 | gut | gut | gut | gut | 47 | 49 | sehr gut |
| 10 | sehr gut | gut-sehr gut | sehr gut | gut-sehr gut | 49 | 46 | gut |
| 11 | gut | gut | gut | gut | 45 | 46 | gut |
| 12 | gut | gut-sehr gut | gut | gut | 48 | 47 | sehr gut |
| 13 | sehr gut | gut-sehr gut | gut | gut | 45 | 45 | gut |
| 14 | gut | gut | gut | gut | 46 | 45 | sehr gut |
| 15 | sehr gut | gut-sehr gut | sehr gut | gut | 50 | 46 | gut |
| 16 | sehr gut | sehr gut | sehr gut | sehr gut | 52 | 54 | sehr gut |
| 17 | sehr gut | sehr gut | sehr gut | sehr gut | 54 | 53 | sehr gut |
| 18 | sehr gut | sehr gut | sehr gut | sehr gut | 50 | 49 | sehr gut |
| 19 | gut-sehr gut | gut | gut | gut | 47 | 48 | sehr gut |
| 20 | gut-sehr gut | gut-sehr gut | gut | gut | 46 | 46 | sehr gut |
| 21 | gut | gut | gut | gut | 45 | 46 | sehr gut |
| 22 | sehr gut | sehr gut | sehr gut | sehr gut | 49 | 50 | sehr gut |

EP 0 301 405 B1

Tabelle 2: Fortsetzung

| Beispiel und Datenplatte (jeweils 2 Proben) Nr. | "tracking-Verhalten" Vor dem Beschreiben: | | Nach dem Beschreiben: | | Signal-Rausch-Verhältnis | | Reproduzierbarkeit des Eigenschaftsprofils |
|---|---|---|---|---|---|---|---|
| | Probe 2 Note | Probe 3 Note | Probe 2 Note | Probe 3 Note | Probe 2 dB | Probe 3 dB | |
| 23 | sehr gut | sehr gut | sehr gut | sehr gut | 51 | 50 | sehr gut |
| 24 | sehr gut | sehr gut | sehr gut | sehr gut | 50 | 52 | sehr gut |
| 25 | sehr gut | sehr gut | sehr gut | gut-sehr gut | 49 | 47 | gut-sehr gut |
| V1 | unbefriedigend | unbefriedigend | schlecht | schlecht | 42 | 35 | schlecht |
| V2 | schlecht | bis schlecht | schlecht | schlecht | 38 | 39 | gut |

## Patentansprüche

1. Flächenförmiges, mehrschichtiges, laseroptisches Aufzeichnungsmaterial, welches
   a) einen dimensionsstabilen, optisch klaren, aus Kunststoffen aufgebauten Träger mit strukturierter Oberfläche,

EP 0 301 405 B1

b) eine darauf aufliegende Zwischenschicht, die in organischen Lösungsmitteln unlöslich ist und die gegenüber diesen als Diffusionssperre wirkt, und hierauf

c) eine durch Auftragen aus einer Lösung und Trocknen herstellbare, amorphe, thermisch veränderbare, Farbstoffe enthaltende Aufzeichnungsschicht

aufweist, dadurch gekennzeichnet, daß seine Zwischenschicht (b)

$b_1$) 5 bis 95 nm dick ist und, jeweils bezogen auf (b), aus

$b_2$) 88 bis 99,5 Gew.% an Oxiden und/oder Oxidhydraten von einem oder von mehreren der Elemente aus der Gruppe Titan, Zirkonium, Hafnium, Thorium, Vanadin, Niob, Tantal, Wolfram, Aluminium, Gallium, Indium, Silizium, Germanium und Zinn und aus

$b_3$) 0,5 bis 12 Gew.% an Kohlenwasserstoffresten besteht und

$b_4$) durch Auflösen eines Alkoxids oder mehrerer Alkoxide von einem oder von mehreren der oben aufgeführten Elemente in einem polaren, im wesentlichen $C_1$- bis $C_6$-Alkanole enthaltenden, flüssigen Medium, Auftragen dieser Lösung auf der Oberfläche des Trägers (a) und Tempern der in dieser Weise erhaltenen feuchten Schicht in Gegenwart von Wasser bei 50 bis 120°C während 5 Minuten bis 2 Stunden herstellbar ist.

2. Aufzeichnungsmaterial nach Anspruch 1, dadurch gekennzeichnet, daß seine Zwischenschicht (b) aus 92 bis 98 Gew.% an Oxiden und/oder Oxidhydraten von einem oder von mehreren der Elemente aus der Gruppe Titan, Zirkonium, Aluminium, Silizium und Zinn und aus 2 bis 8 Gew.% an Kohlenwasserstoffresten besteht.

3. Verfahren zur Herstellung eines flächenförmigen, mehrschichtigen, laseroptischen Aufzeichnungsmaterials durch

1. Herstellen eines dimensionsstabilen, optisch klaren Trägers (a) mit strukturierter Oberfläche mittels formgebender Bearbeitung von Kunststoffen oder von Kunststoffvorprodukten,

2. Aufbringen einer Zwischenschicht (b), die in organischen Lösungsmitteln unlöslich ist und die gegenüber diesen als Diffusionssperre wirkt, auf der strukturierten Oberfläche des Trägers (a) und

3. Herstellen einer amorphen, thermisch veränderbaren, Farbstoffe enthaltenden Aufzeichnungsschicht (c) auf der Zwischenschicht (b) mittels Auftragen einer farbstoffhaltigen Lösung und Trocknen der so erhaltenen feuchten Schicht,

dadurch gekennzeichnet, daß man hierbei im Verfahrensschritt 2 die Zwischenschicht (b) in einer Trockenschichtdicke von 5 bis 95 nm durch

2.1 Auflösen eines Alkoxids oder mehrerer Alkoxide von einem oder von mehreren der Elemente aus der Gruppe Titan, Zirkonium, Hafnium, Thorium, Vanadin, Niob, Tantal, Wolfram, Aluminium, Gallium, Indium, Silizium, Germanium und Zinn in einem polaren, im wesentlichen $C_1$- bis $C_6$-Alkanole enthaltenden, flüssigen Medium,

2.2 Auftragen der resultierenden Lösung auf der strukturierten Oberfläche des Trägers (a) und

2.3 Tempern der in dieser Weise erhaltenen Schicht in Gegenwart von Wasser bei 50 bis 120°C während 5 Minuten bis 2 Stunden

herstellt.

4. Verfahren nach Anspruch 3, dadurch gekennzeichnet, daß man die im Verfahrensschritt 2.2 erhaltene feuchte Schicht vor dem Tempern (Verfahrensschritt 2.3) bei Temperaturen unterhalb 50°C von der Hauptmenge des polaren, flüssigen Mediums befreit.

5. Verfahren nach Anspruch 3 oder 4, dadurch gekennzeichnet, daß man hierbei im Verfahrensschritt 2.3 das Wasser als Flüssigkeit zur Schicht zugibt.

6. Verfahren nach Anspruch 3 oder 4, dadurch gekennzeichnet, daß man hierbei den Verfahrensschritt 2.3 in Gegenwart von Wasserdampf durchführt.

7. Verfahren nach einem der Ansprüche 3 bis 6, dadurch gekennzeichnet, daß man bei dem Verfahrensschritt 2.3 zusätzlich Ammoniak, Hydrazin, Methylamin, Dimethylamin, Trimethylamin, Ethylamin, Diethylamin, Triethylamin, Pyridin, Pyrazin, Pyrrol, Imidazol, Pyrimidin, Piperazin, Pyrazolidin, Imidazolidin, Pyrrolidin oder Morpholin in Spuren dem Wasser hinzugibt.

20

EP 0 301 405 B1

**Claims**

1. A planar, multilayered, laser-optical recording material comprising
   a) a dimensionally stable, optically clear base material composed of a plastics substance and having a structured surface,
   b) a superposed intermediate layer which is insoluble in organic solvents and which acts as a diffusion barrier thereagainst, and superposed thereon
   c) an amorphous, thermally alterable, dye-containing recording layer producible by application from a solution and drying,
   wherein its intermediate layer (b)
   $b_1$) is from 5 to 95 nm thick and, based on (b), consists of
   $b_2$) from 88 to 99.5% by weight of an oxide and/or hydrated oxide of one or more of the elements of the group consisting of titanium, zirconium, hafnium, thorium, vanadium, niobium, tantalum, tungsten, aluminum, gallium, indium, silicon, germanium and tin and of
   $b_3$) from 0.5 to 12% by weight of a hydrocarbyl and
   $b_4$) is producible by dissolving one or more alkoxides of one or more of the abovementioned elements in a polar liquid medium essentially comprising a $C_1$-$C_6$-alkanol, applying this solution to the surface of base material (a) and heat-treating the moist layer obtainable in this way in the presence of water at from 50 to 120°C for from 5 minutes to 2 hours.

2. A recording material as claimed in claim 1, wherein its intermediate layer (b) consists of from 92 to 98% by weight of an oxide and/or hydrated oxide of one or more of the elements of the group consisting of titanium, zirconium, aluminum, silicon and tin and of from 2 to 8% by weight of a hydrocarbyl.

3. A process for producing a planar, multilayered, laser-optical recording material by
   1. producing a dimensionally stable, optically clear base material (a) having a structured surface by shape-confering processing of a plastics material or of a plastics precursor,
   2. applying an intermediate layer (b) which is insoluble in organic solvents and which acts as a diffusion barrier thereagainst to the structured surface of the base material (a) and
   3. preparing an amorphous, thermally alterable, dye-containing recording layer (c) on intermediate layer (b) by applying a dye-containing solution and drying the moist layer thus obtained,
   wherein, in process step 2, the intermediate layer (b) is produced in a dry film thickness of from 5 to 95 nm by
   2.1 dissolving one or more alkoxides of one or more of the elements from the group consisting of titanium, zirconium, hafnium, thorium, vanadium, niobium, tantalum, tungsten, aluminum, gallium, indium, silicon, germanium and tin in a polar liquid medium essentially comprising a $C_1$-$C_6$-alkanol,
   2.2 applying the resulting solution to the structured surface of the base material (a) and
   2.3 heat treating the layer obtained in this way in the presence of water at from 50 to 120°C for from 5 minutes to 2 hours.

4. A process as claimed in claim 3, wherein the moist layer obtained in process step 2.2 is freed at below 50°C from the bulk of the polar, liquid medium prior to the heat treatment (process step 2.3).

5. A process as claimed in claim 3 or 4, wherein, in process step 2.3, the water is added to the layer as a liquid.

6. A process as claimed in claim 3 or 4, wherein process step 2.3 is carried out in the presence of water vapor.

7. A process as claimed in any of claims 3 to 6, wherein, in process step 2.3, additionally ammonia, hydrazine, methylamine, dimethylamine, trimethylamine, ethylamine, diethylamine, triethylamine, pyridine, pyrazine, pyrrole, imidazole, pyrimidine, piperazine, pyrazolidine, imidazolidine, pyrrolidine or morpholine is added to the water in a trace amount.

**Revendications**

1. Matériau d'enregistrement optique laser planiforme à couche multiple comprenant :

21

a) un support à dimensions stables, transparent, en résine synthétique, à surface structurée,

b) sur le support a), une couche intermédiaire insoluble dans les solvants organiques et qui agit à l'égard de ceux-ci comme une barrière de diffusion, et sur cette couche

c) une couche d'enregistrement amorphe, subissant des modifications sous l'action de la chaleur, contenant des colorants, déposée par application d'une solution et séchage,

caractérisé en ce que la couche intermédiaire b)

b1) est épaisse de 5 à 95 nm et consiste, par rapport à b), en

b2) 88 à 99,5 % en poids d'oxydes et/ou d'oxydes hydratés d'un ou plusieurs des éléments du groupe du titane, du zirconium, du hafnium, du thorium, du vanadium, du niobium, du tantale, du tungstène, de l'aluminium, du gallium, de l'indium, du silicium, du germanium et de l'étain, et

b3) 0,5 à 12 % en poids de radicaux d'hydrocarbures, et

b4) est appliquée par dissolution d'un alcoolate dou de plusieurs alcoolates d'un ou plusieurs des éléments précités dans un milieu liquide polaire contenant essentiellement des alcanols en C1-C6, application de cette solution à la surface du support a) et cuisson de la couche humide ainsi déposée en présence d'eau à des températures de 50 à 120°C dans une durée de 5 minutes à 2 heures.

**2.** Matériau d'enregistrement selon la revendication 1, caractérisé en ce que sa couche intermédiaire b) consiste en 92 à 98 %, en poids d'oxydes et/ou d'oxydes hydratés d'un ou plusieurs des éléments du groupe du titéane, du zirconium, de l'aluminium, du silicium et de l'étain et en 2 à 8 % en poids de radicaux d'hydrocarbures.

**3.** Procédé pour la préparation d'un matériau d'enregistrement optique laser planiforme à couche multiple par :

1.- préparation d'un support transparent à dimensions stables a) à surface structurée par façonnage de résines synthétiques ou de produits intermédiaires de la préparation du résines synthétiques,

2.- application d'une couche intermédiaire b) insoluble dans les solvants organiques et agissant à l'égard de ceux-ci en tant que barrière de diffusion, sur la surface structurée du support a), et

3.- application d'une couche d'enregistrement c) amorphe, subissant des modifications sous l'action de la chaleur, contenant des colorants, sur la couche intermédiaire b) à partir d'une solution contenant des colorants et séchage de la couche humide ainsi déposée, caractérisé en ce que, dans le stade opératoire 2, on applique la couche intermédiaire b) à une épaisseur à sec de 5 à 95 nm par

2-1.- dissolution d'un alcoolate ou de plusieurs alcoolates d'un ou plusieurs des éléments du groupe du titane, du zirconium, du hafnium, du thorium, du vanadium, du niobium, du tantale, du tungstène, de l'aluminium, du gallium, de l'indium, du silicium, du germanium et de l'étain dans un milieu liquide polaire contenant essentiellement des alcanols en C1-C6,

2-2.- application de cette solution sur la surface structurée du support a), et

2-3.- cuisson de la couche ainsi déposée en présence d'eau à des températures de 50 à 120°C dans des durées de 5 mn à 2 n.

**4.** Procédé selon la revendication 3, caractérisé en ce que la couche humide obtenue au stade opératoire 2.2 est débarrassée avant la cuisson (stade opératoire 2.3) de la plus grande partie du milieu liquide polaire à des températures inférieures à 50°C.

**5.** Procédé selon la revendication 3 ou 4, caractérisé en ce que, au stade 2.3, on ajoute à la couche de l'eau à l'état liquide.

**6.** Procédé selon la revendication 3 ou 4, caractérisé en ce que le stade opératoire 2.3 est mis en oeuvre en présence de vapeur d'eau.

**7.** Procédé selon une des revendications 3 à 6, caractérisé en ce que, au stade opératoire 2.3, on ajoute encore à l'eau, à l'état de traces, de l'ammoniac, de l'hydrazine, de la méthylamine, de la diméthylamine, de la triméthylamine, de l'éthylamine, de la diéthylamine, de la triéthylamine, de la pyridine, de la pyrazine, du pyrrole, de l'imidazole, de la pyrimidine, de la pipéraine, de la pyraloline, de l'imidazolidine, de la pyrrolidine ou de la morpholine.